# EUROPEAN PATENT APPLICATION

(11) **EP 4 664 235 A1**
(43) Date of publication of application: **17.12.2025**
(21) Application number: 24775202.5
(22) Date of filing: 20.03.2024
(51) Int. Cl.: G06F 1/16

(54) **ELECTRONIC DEVICE COMPRISING THICKNESS COMPENSATION MEMBER**

(30) Priority: 20.03.2023 KR 20230035732; 14.04.2023 KR 20230049176
(71) Applicant: Samsung Electronics Co., Ltd., Suwon-si, Gyeonggi-do 16677 (KR)
(72) Inventor: LEE, Sangyup, Suwon-si, Gyeonggi-do 16677 (KR); KIM, Jeongseob, Suwon-si, Gyeonggi-do 16677 (KR); PARK, Sungwu, Suwon-si, Gyeonggi-do 16677 (KR); PARK, Seonguk, Suwon-si, Gyeonggi-do 16677 (KR); AN, Yonghee, Suwon-si, Gyeonggi-do 16677 (KR); CHO, Hyongrae, Suwon-si, Gyeonggi-do 16677 (KR)
(74) Representative: Gulde & Partner
(86) International application number: PCT/KR2024/003510
(87) International publication number: WO 2024/196156

(57) **Abstract**

An electronic device comprising a thickness compensation member is disclosed. A foldable electronic device according to various embodiments of the present invention may comprise: a first housing having a first surface and a second surface positioned in the opposite direction of the first surface; a second housing, which is coupled so as to be rotatable with respect to the first housing, has a third surface extending from the first surface and a fourth surface positioned in the opposite direction of the third surface when the electronic device is unfolded, and has at least one part that is thinner than the first housing; a flexible display which is positioned on the first surface and the third surface, and which can be folded and unfolded according to the folding and unfolding of the electronic device; a processor arranged in the first housing; and a thickness compensation member for compensating for at least a portion of the thickness difference between the first housing and the second housing. The second housing can have an accommodation portion, which is on the fourth surface and can be detachably coupled to the thickness compensation member.

## Description

### [Technical Field]

Various embodiments of the disclosure relate to an electronic device and, more particularly, to an electronic device including a thickness compensation member.

### [Background Art]

Electronic devices are being developed to include enhanced design aspects and differentiated functional features. Electronic devices are gradually evolving from a uniform rectangular shape to diverse shapes. An electronic device may have a transformable structure that is convenient to carry and enables use of a large-screen display. For example, the electronic device may have a structure (e.g., a foldable structure) capable of varying the display area (e.g., display region) of a flexible display through the support of housings that rotate relative to each other.

An electronic device may have various input means. For example, the electronic device may receive user input through a keyboard that is connected to the electronic device via a wired or wireless connection. In addition, the electronic device may implement a user interface (UI) similar to a mouse using a touchpad.

### [Disclosure of Invention]

### [Solution to Problem]

As foldable electronic devices become larger, thickness differences may occur between a plurality of housings in order to reduce thickness and weight. Such thickness differences may hinder the electronic devices from being stably positioned when the foldable electronic devices are in an unfolded state.

In addition, conventionally, a peripheral device of an electronic device (e.g., a keyboard or a stand cover) could be stored between a plurality of housings of the foldable electronic device in a folded state. However, as the folding radii of foldable electronic devices have decreased and hinge structures have improved, the gaps between the plurality of housings in the folded state have become narrower, reducing the space for storing an input device.

Various embodiments of the disclosure may provide a foldable electronic device in which stability is improved by compensating for the thickness difference between housings and in which a storage space for peripheral devices such as a keyboard is provided.

A foldable electronic device according to various embodiments of the disclosure may include a first housing having a first surface and a second surface located opposite to the first surface, a second housing rotatably coupled to the first housing, the second housing having a third surface extending from the first surface in an unfolded state of the electronic device and a fourth surface located opposite to the third surface, wherein at least a portion of the second housing having a thinner thickness than the first housing, a flexible display positioned on the first surface and the third surface and configured to be foldable and unfoldable in accordance with folding and unfolding of the electronic device, a processor disposed in the first housing, memory configured to store instructions executable by the processor, and a thickness compensation member configured to at least partially compensate for a thickness difference between the first housing and the second housing. The second housing may include a receiving portion formed on the fourth surface and configured to be detachably coupled to the thickness compensation member.

In various embodiments, in the unfolded state, the first surface and the third surface are positioned on the same plane.

In various embodiments, the receiving portion may include a magnet disposed to detachably couple the thickness compensation member.

In various embodiments, the magnet may include a housing-side magnet disposed at an edge of the second housing.

In various embodiments, the thickness compensation member may include a stand cover, and the stand cover may include a first plate configured to be attached to the receiving portion, a second plate configured to be rotatable relative to the first plate and to support the first housing or the second housing, and a hinge rotatably coupling the first plate and the second plate.

In various embodiments, the stand cover may include a cover-side magnet disposed on a side surface of the first plate, and the receiving portion may include a housing-side magnet disposed at a position corresponding to the cover-side magnet.

In various embodiments, the stand cover may include a cover-center magnet disposed at a position spaced apart from the side surface of the first plate, and the receiving portion may include a housing-center magnet disposed at a position corresponding to the cover-center magnet.

In various embodiments, the first housing may include a stand attachment portion formed on the second surface and configured to attach the stand cover.

In various embodiments, the stand cover may include a cover-side magnet disposed on a side surface of the first plate, and a cover-center magnet disposed at a position spaced apart from the side surface of the first plate. The stand attachment portion may include a housing-side magnet disposed at a position corresponding to the cover-side magnet, and a housing-center magnet disposed at a position corresponding to the cover-center magnet.

In various embodiments, the stand cover may include a folding portion configured to fold a corner of the second plate at a predetermined angle.

In various embodiments, the thickness compensation member may include a keyboard.

In various embodiments, the keyboard includes a keyboard-side magnet disposed on a short side of the first plate, and the receiving portion may include a housing-side magnet disposed on a side surface of the second housing at a position corresponding to the keyboard-side magnet.

In various embodiments, the first housing may include at least one keyboard attachment region on the first surface.

In various embodiments, the first housing may include a keyboard sensor configured to detect attachment of the keyboard to the keyboard attachment region and operatively connected to the processor.

In various embodiments, the keyboard sensor may include a Hall sensor, and the keyboard may include a sensor magnet configured to apply a magnetic field to the Hall sensor when the keyboard is attached to the keyboard attachment region.

In various embodiments, the flexible display may include a first region located on the first surface and a second region located on the third surface, and the keyboard attachment region may include a first keyboard attachment region positioned on the first housing relatively closer to an end of the first housing, and a second keyboard attachment region positioned on the first housing relatively farther from the end of the first housing.

In various embodiments, the instructions may be configured to, when executed by the processor, cause the electronic device to detect that the keyboard is attached to the first keyboard attachment region and define a region, which is not covered by the keyboard attachment region in the first region, as an additional display region extending from the second region.

In various embodiments, the instructions are configured to, when executed by the processor, cause the electronic device to detect that the keyboard is attached to the first keyboard attachment region and display a user interface in a region that is not covered by the keyboard attachment region in the first region.

In various embodiments, the instructions are configured to, when executed by the processor, cause the electronic device to detect that the keyboard is attached to the second keyboard attachment region and define a touch rejection region to ignore touch input with respect to a portion that comes into contact with a user's hand during use of the keyboard.

In various embodiments, the instructions are configured to, when executed by the processor, to cause the electronic device to detect that the keyboard is attached to the second keyboard attachment region and define a touchpad region in a region that is not covered by the keyboard attachment region in the first region.

According to various embodiments of the disclosure, a foldable electronic device may include a receiving portion formed in the second housing to which a thickness compensation member is coupled to compensate for a thickness difference between the housings. As a result, the foldable electronic device may be improved in stability in an unfolded state. In addition, since the thickness compensation member includes a keyboard and a stand cover, a storage space for the keyboard and/or the stand cover may be provided.

In addition, various effects that are directly or indirectly understood from this document may also be provided.

### [Brief Description of Drawings]

In connection with the description of the drawings, the same or similar components may be denoted by the same or similar reference numerals.
FIG. 1 is a block diagram of an electronic device according to various embodiments of the disclosure in a network environment.
FIG. 2A is a front view, a rear view, and a side view illustrating a foldable electronic device in an unfolded state according to various embodiments of the disclosure.
FIG. 2B is a front view, a rear view, and a side view illustrating a foldable electronic device in a folded state according to various embodiments of the disclosure.
FIG. 2C is a perspective view illustrating the foldable electronic device in a half-unfolded state according to various embodiments of the disclosure.
FIG. 3A is a rear view illustrating a foldable electronic device in an unfolded state according to various embodiments of the disclosure.
FIG. 3B is a rear view illustrating the foldable electronic device and a thickness compensation member in the unfolded state according to various embodiments of the disclosure.
FIG. 3C is a side view illustrating the foldable electronic device and the thickness compensation member in the unfolded state according to various embodiments of the disclosure.
FIG. 3D is a side view illustrating the foldable electronic device and the thickness compensation member in the folded state according to various embodiments of the disclosure.
FIG. 4A is a plan view illustrating a stand cover according to various embodiments of the disclosure.
FIG. 4B is a rear view illustrating the stand cover and a foldable electronic device according to various embodiments of the disclosure.
FIG. 4C is a side view illustrating the stand cover and the foldable electronic device in the half-unfolded state according to various embodiments of the disclosure.
FIG. 4D is a rear view illustrating the stand cover and the foldable electronic device according to various embodiments of the disclosure.
FIG. 4E is a side view illustrating the stand cover and the foldable electronic device in the half-unfolded state according to various embodiments of the disclosure.
FIG. 4F is a side view illustrating the stand cover and the foldable electronic device in the unfolded state according to various embodiments of the disclosure.
FIG. 4G is a perspective view and a side view illustrating the stand cover and the foldable electronic device in the unfolded state according to various embodiments of the disclosure.
FIG. 5A is a plan view illustrating a keyboard according to various embodiments.
FIG. 5B is a front view illustrating a foldable electronic device in an unfolded state according to various embodiments.
FIG. 5C is a front view illustrating a keyboard and a foldable electronic device according to various embodiments.
FIG. 5D is a front view illustrating a keyboard and a foldable electronic device according to various embodiments.

### [Mode for the Invention]

Hereinafter, various embodiments will be described in detail with reference to the accompanying drawings.

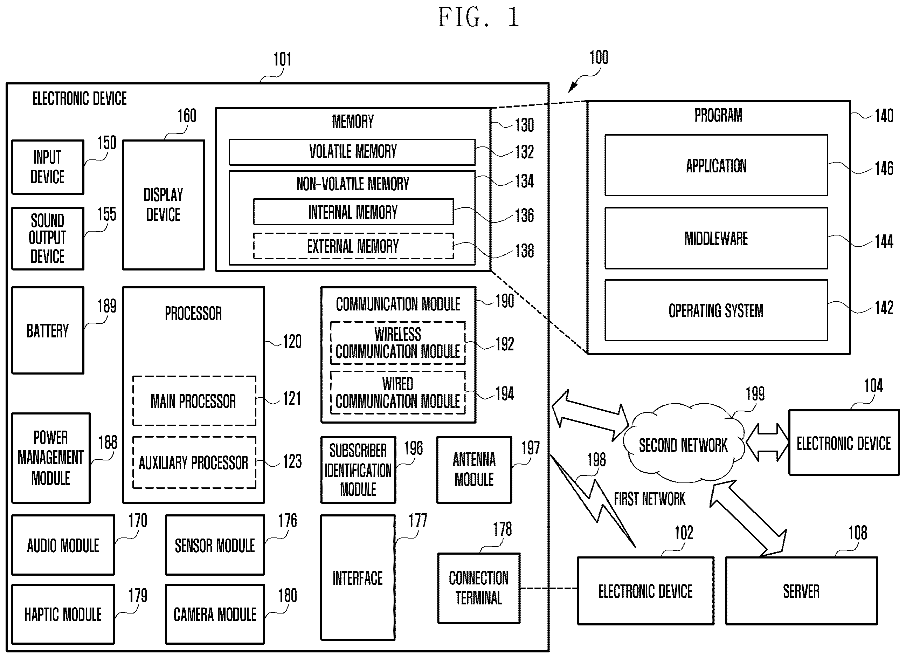

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device(e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B or C", "at least one of A, B and C", and "at least one of A, B, or C" may include any one of, or all possible combinations of, the items enumerated together in the corresponding phrase. As used herein, such terms as "1st" and "2nd", or "first" and "second" may be used to simply distinguish a corresponding component from another, and do not limit the components in other aspects (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic", "logic block", "part", or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program(140)) including one or more instructions that are stored in a storage medium (e.g., internal memory(136) or external memory(138)) that is readable by a machine (e.g., the electronic device(101)). For example, a processor (e.g., the processor(120)) of the machine (e.g., the electronic device(101)) may invoke at least one of the one or more instructions stored in the storage medium, and execute it, with or without using one or more other components under the control of the processor. This allows the machine to be operated to perform at least one function according to the at least one instruction invoked. The one or more instructions may include code generated by a compiler or code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory(CD-ROM)), or be distributed online via an application store(e.g., Play StoreTM), or directly between two user devices (e.g., smart phones), such as through download or upload. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the plurality of entities may be separately arranged in other components. According to various embodiments, one or more of the above-described components may be omitted, or one or more other components may be added. Alternatively or additionally, a plurality of components (e.g., modules or programs) may be integrated into a single component. In such a case, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

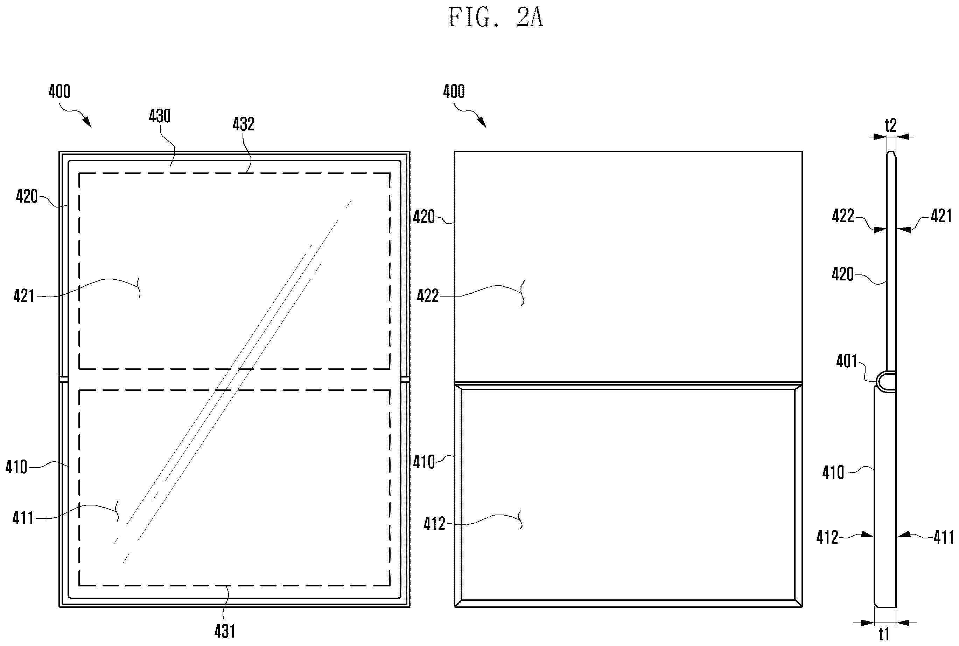

FIG. 2A is a front view, a rear view, and a side view illustrating a foldable electronic device 400 in an unfolded state according to various embodiments of the disclosure.

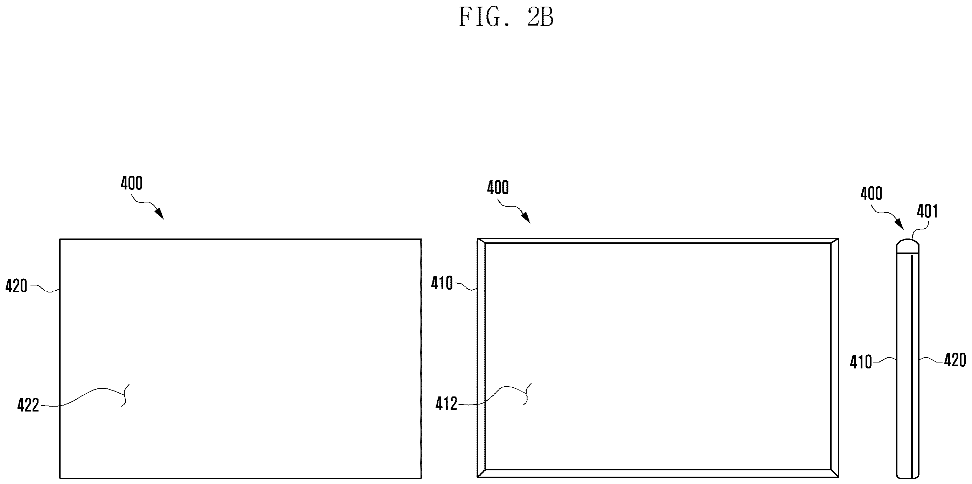

FIG. 2B is a front view, a rear view, and a side view illustrating the foldable electronic device 400 in a folded state according to various embodiments of the disclosure.

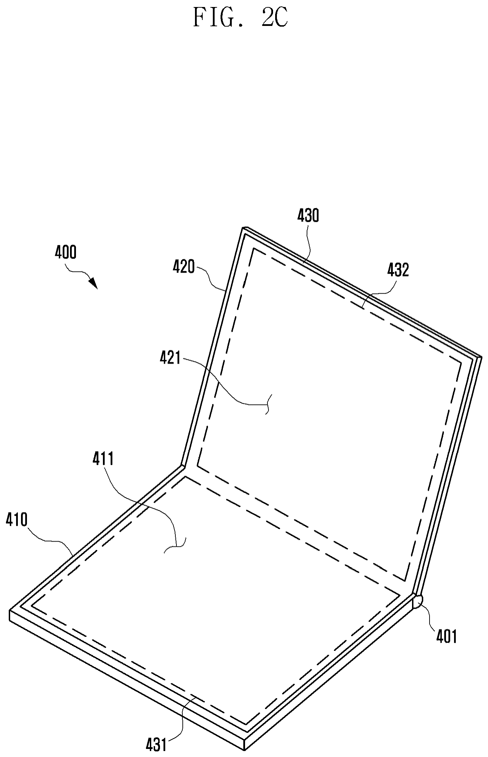

FIG. 2C is a perspective view illustrating the foldable electronic device 400 in a half-unfolded state according to various embodiments of the disclosure.

Referring to FIGS. 2A to 2C, a foldable electronic device 400 (e.g., the electronic device 101 of FIG. 1) may include a first housing 410, a second housing 420, and a flexible display 430. The first housing 410 may be a member having an internal space so that internal components of the electronic device (e.g., the processor 120 of FIG. 1, the memory 130 of FIG. 1, the communication module 190 of FIG. 1, and/or the battery 189 of FIG. 1) may be disposed. The second housing 420 may be a member having an internal space so that some of the internal components of the electronic device may be disposed together with the first housing 410. The second housing 420 may be a housing rotatably coupled to the first housing 410. For example, the second housing 420 may be rotatably coupled to the first housing 410 through a member such as a hinge 401. By rotation of the second housing 420, the foldable electronic device 400 may assume an unfolded state as illustrated in FIG. 2A, a folded state as illustrated in FIG. 2B, a half-unfolded state as illustrated in FIG. 2C, and an intermediate state therebetween.

In various embodiments, a thickness T2 of the second housing 420 may be smaller than a thickness T1 of the first housing 410. Accordingly, a thickness difference T3 between the first housing 410 and the second housing 420 may occur. Due to the miniaturization and weight reduction of internal components of electronic devices, in a foldable electronic device 400 such as a foldable tablet computer and/or a foldable laptop computer, internal components thereof may be relatively concentrated in one of a plurality of housings. Thus, making some of the plurality of housings thinner than the other housing or housings may be advantageous in reducing the overall thickness of the foldable electronic device 400 in the folded state.

The flexible display 430 may be foldable and unfoldable in conjunction with folding and unfolding of the electronic device, and may be configured to display images and receive user input through a touchscreen. In various embodiment, the flexible display 430 may include a flexible display 430 panel, such as an organic light emitting diode (OLED) panel. In various embodiments, the flexible display 430 may include a flexible window configured to protect the flexible display 430 panel from external stress and foreign substances. In the disclosure, it should be understood that the term "display" includes not only a display panel but also a display assembly including members that constitute a display unit together with the display panel, such as a transparent panel, a protective window, a protective film, a mesh plate, a touch sensor, and/or a digitizer.

In various embodiments, the first housing 410 may have a first surface 411 that faces the user when the foldable electronic device 400 is used in the unfolded state, and the second housing 420 may have a third surface 421 that extends from the first surface 411 and also faces the user in the unfolded state of the foldable electronic device 400. The flexible display 430 may be positioned on the first surface 411 and the third surface 421. A region of the flexible display 430 disposed on the first surface 411 of the first housing 410 may be defined as a first region 431, and a region of the flexible display 430 disposed on the third surface 421 of the second housing 420 may be defined as a second region 432.

In various embodiments, in the unfolded state of the foldable electronic device 400, the first surface 411 and the third surface 421 may be positioned substantially on the same plane. Accordingly, in the unfolded state of the foldable electronic device 400, a level difference of the flexible display 430 at the boundary between the first surface 411 and the third surface 421 may be eliminated and/or reduced. A surface of the first housing 410 that is located opposite to the first surface 411 may be defined as a second surface 412, and a surface of the second housing 420 that is located opposite to the third surface 421 may be defined as a fourth surface 422.

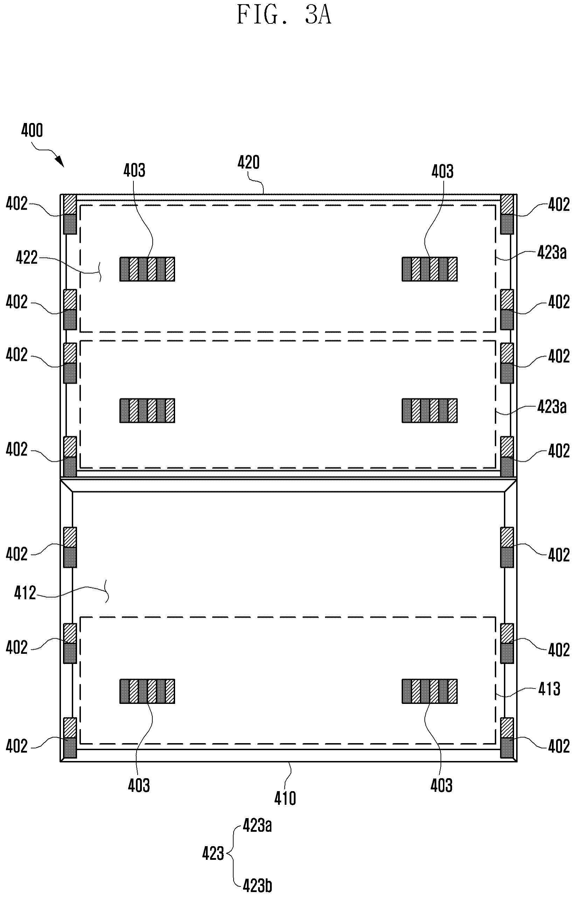

FIG. 3A is a rear view illustrating a foldable electronic device 400 in the unfolded state according to various embodiments of the disclosure.

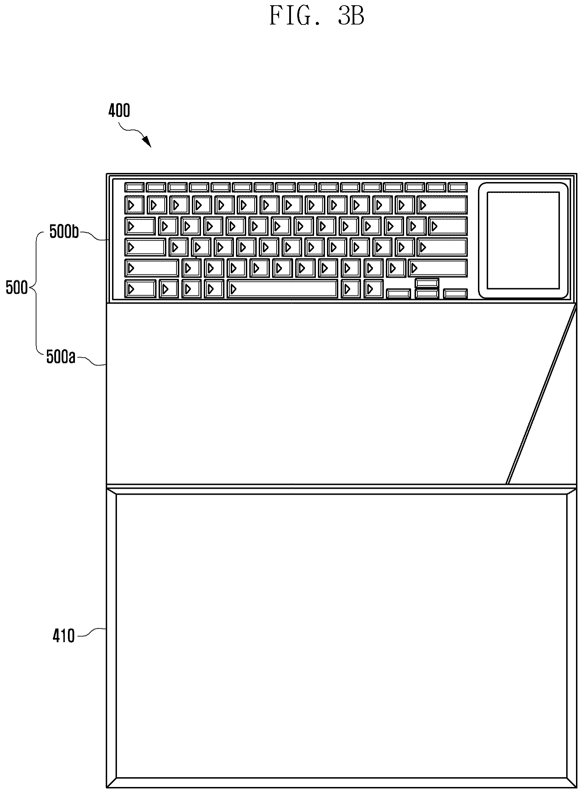

FIG. 3B is a rear view illustrating the foldable electronic device 400 and a thickness compensation member 500 in the unfolded state according to various embodiments of the disclosure.

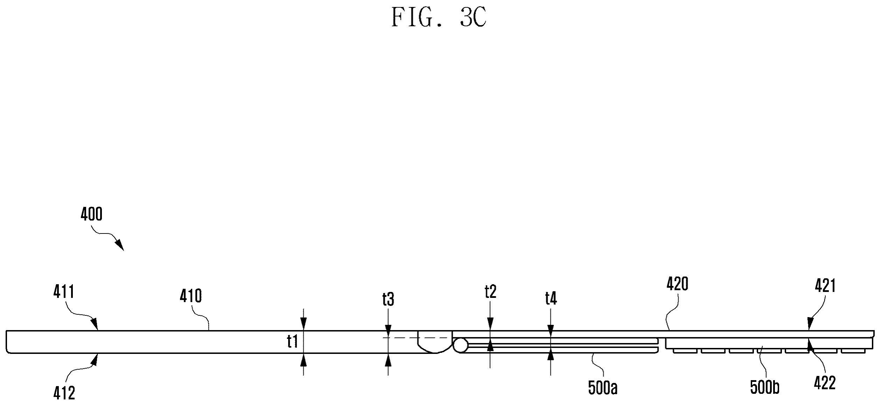

FIG. 3C is a side view illustrating the foldable electronic device 400 and the thickness compensation member 500 in the unfolded state according to various embodiments of the disclosure.

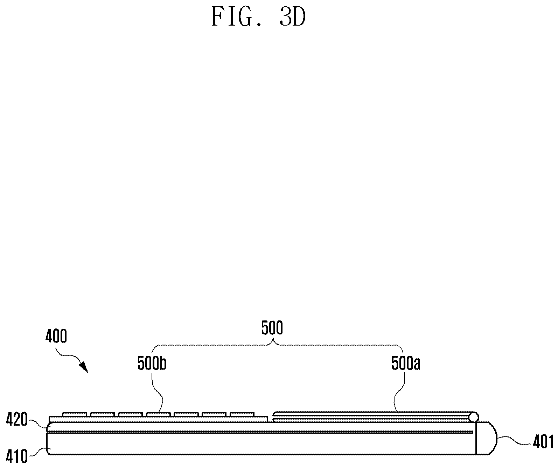

FIG. 3D is a side view illustrating the foldable electronic device 400 and the thickness compensation member 500 in the folded state according to various embodiments of the disclosure.

Referring to FIG. 3A, a foldable electronic device 400 according to various embodiments may include a receiving portion 423. The receiving portion 423 may be a region configured such that a thickness compensation member 500 is detachably attached to the foldable electronic device 400. The receiving portion 423 may be disposed on the fourth surface 422 of the second housing 420. In various embodiments, the foldable electronic device 400 may include a plurality of receiving portions 423 (e.g., a first receiving portion 423a and a second receiving portion 423b).

The receiving portions 423 may include attachment means for attaching the thickness compensation member 500. For example, the receiving portions 423 may include housing-side magnets 402 configured to attach the thickness compensation member 500. The housing-side magnets 402 may be magnets disposed at an edge of the second housing 420 in the receiving portion 423. In some embodiments, the receiving portion 423 may include housing-center magnets 403. The housing-center magnets 403 may be disposed at positions spaced apart from the edge of the second housing 420 to enhance the attachment force.

Referring to FIGS. 3B to 3D, the thickness compensation member 500 may be a member configured to at least partially compensate for the thickness difference T3 between the first housing 410 and the second housing 420. For example, the thickness compensation member 500 according to various embodiments may be attached to the receiving portions 423 formed on the fourth surface 422 of the second housing 420 of the foldable electronic device 400. Due to the thickness T4 of the thickness compensation member 500, the second housing 420 may be supported in the unfolded state of the foldable electronic device 400, despite the thickness difference T3 between the first housing 410 and the second housing 420.

In various embodiments, the thickness compensation member 500 may include a stand cover 500a and/or a keyboard 500b. The stand cover 500a may be a member configured to protect the housing of the electronic device from the outside and assist in supporting the electronic device. The keyboard 500b may be a device configured to receive key input from a user to control the foldable electronic device 400 or to input characters and/or symbols into the foldable electronic device 400. Detailed operations of the foldable electronic device 400 related to the stand cover 500a and the keyboard 500b will be described later.

Referring again to FIG. 3A, in various embodiments, the first housing 410 may include a stand attachment portion 413. The stand attachment portion 413 may be a region formed on the second surface 412 of the first housing 410 for attaching the stand cover 500a.

The operation of the stand cover 500a attached to the stand attachment portion 413 will be described later.

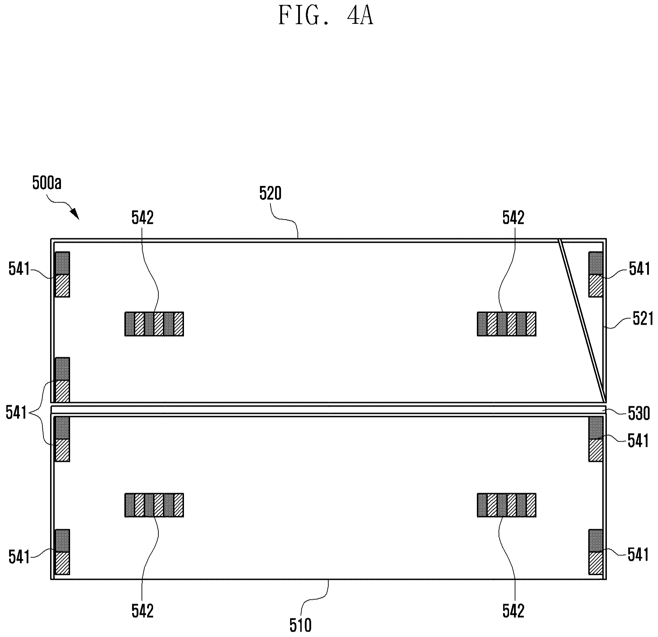

FIG. 4A is a plan view illustrating a stand cover 500a according to various embodiments of the disclosure.

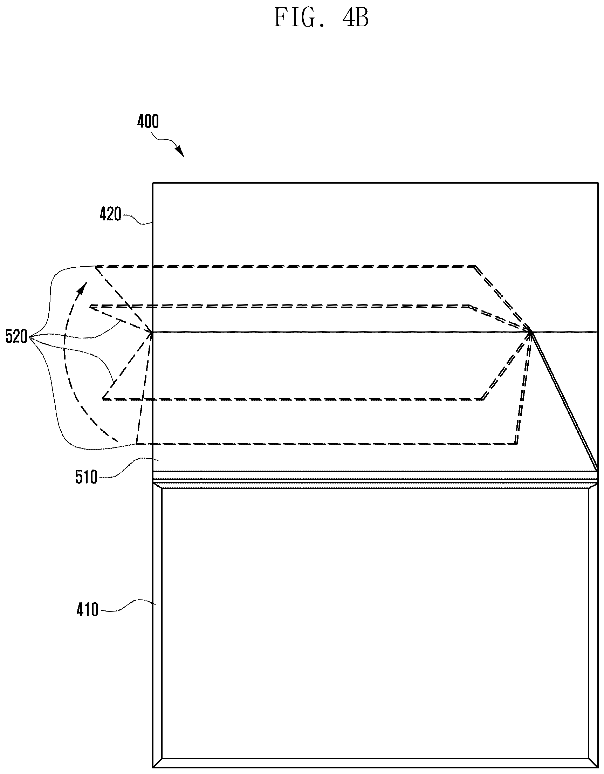

FIG. 4B is a rear view illustrating the stand cover 500a and the foldable electronic device 400 according to various embodiments of the disclosure.

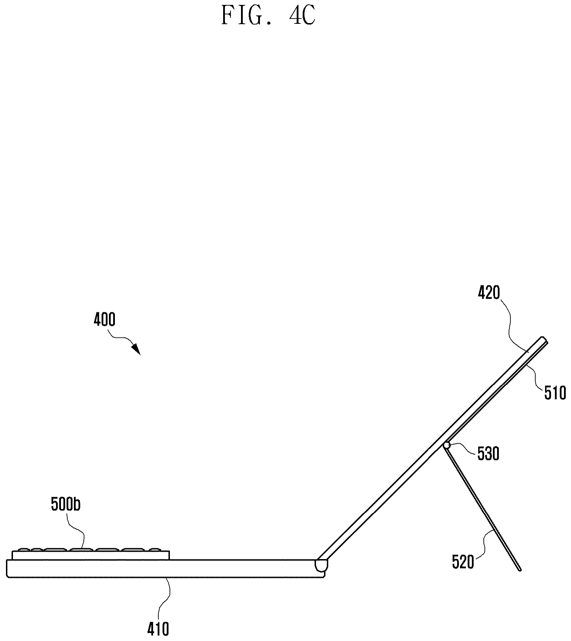

FIG. 4C is a side view illustrating the stand cover 500a and the foldable electronic device 400 in the half-unfolded state according to various embodiments of the disclosure.

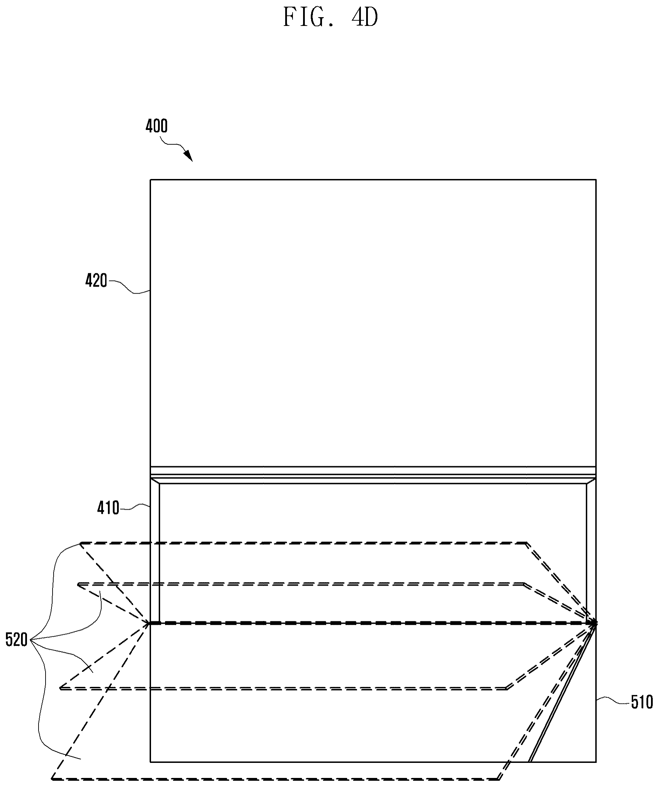

FIG. 4D is a rear view illustrating the stand cover 500a and the foldable electronic device 400 according to various embodiments of the disclosure.

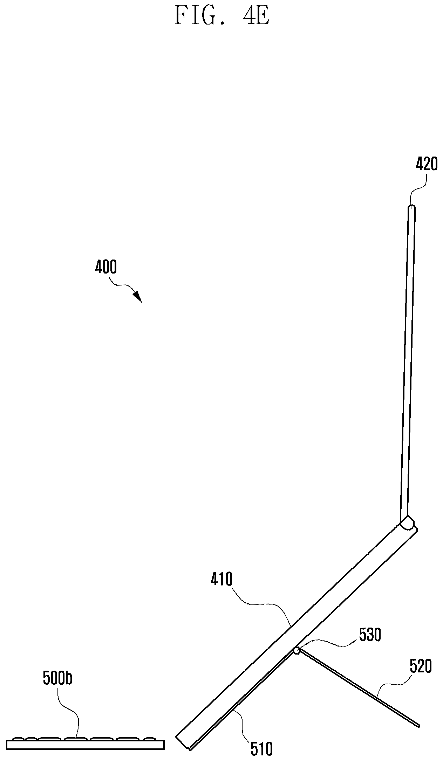

FIG. 4E is a side view illustrating the stand cover 500a and the foldable electronic device 400 in the half-unfolded state according to various embodiments of the disclosure.

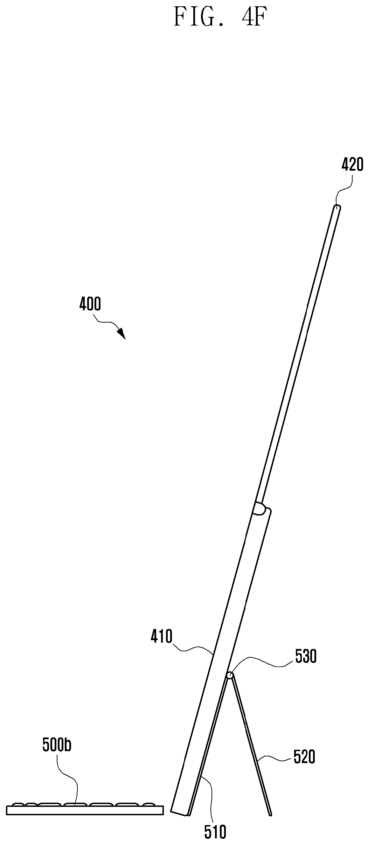

FIG. 4F is a side view illustrating the stand cover 500a and the foldable electronic device 400 in the unfolded state according to various embodiments of the disclosure.

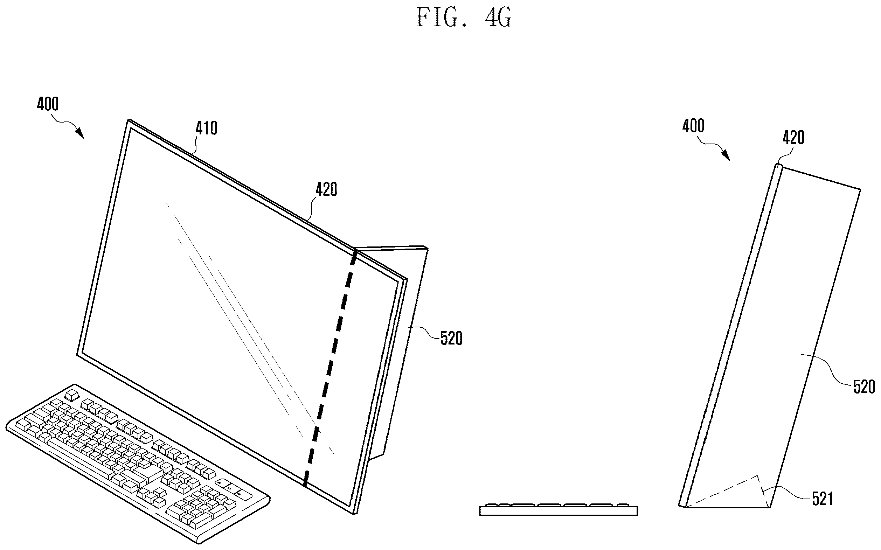

FIG. 4G is a perspective view and a side view illustrating the stand cover 500a and the foldable electronic device 400 in the unfolded state according to various embodiments of the disclosure.

Referring to FIG. 4A, the stand cover 500a may include a first plate 510, a second plate 520, and a hinge 530. The first plate 510 may be a plate-shaped member attached to the foldable electronic device 400 to protect and support the foldable electronic device 400. The second plate 520 may be a plate-shaped member rotatably coupled to the first plate 510. The second plate 520 may be configured to support the first plate 510 and the foldable electronic device 400 with respect to the ground when the second plate 520 is rotated at a predetermined angle relative to the first plate 510. In addition, when the second plate 520 is unfolded in the same plane as the first plate 510, it may protect the surface of the foldable electronic device 400. The hinge 530 may be a member that rotatably connects the first plate 510 and the second plate 520. In various embodiments, the hinge 530 may be a detent hinge 530 in which resistance to rotation increases at one or more predetermined angles.

In various embodiments, the second plate 520 may include a folding portion 521 configured to fold one edge of the second plate 520 at a predetermined angle. The operation of the folding portion 521 will be described later.

In various embodiments, the stand cover 500a may have coupling means configured to be coupled to the receiving portion 423. For example, the stand cover 500a may include magnets (e.g., cover-side magnets 541 and cover-center magnets 542) disposed at positions corresponding to magnets (e.g., housing-side magnets 402 and/or housing-center magnets 403) located in the receiving portion 423.

Referring to FIGS. 4B and 4C, in various embodiments, the second plate 520 of the stand cover 500a may be unfolded at one or more predetermined angles to support the foldable electronic device 400. For example, as illustrated in FIG. 4C, in the half-unfolded state of the foldable electronic device 400, the stand cover 500a may support the second housing 420 by unfolding the second plate 520 while the first plate 510 is attached to the fourth surface of the second housing 420. In this state, the foldable electronic device 400 may provide a user experience similar to that of a laptop computer.

Referring to FIG. 4D, in various embodiments, the first plate 510 of the stand cover 500a may be attached to the stand attachment portion 413 formed on the first housing 410. Referring to FIGS. 4E and 4F, in the half-unfolded state or the unfolded state of the foldable electronic device 400, the second plate 520 may be unfolded at a predetermined angle to support the first housing 410. Referring again to FIG. 3A, the stand attachment portion 413 may include magnets (e.g., the housing-side magnets 402 and the housing-center magnet 403) disposed at positions corresponding to attachment magnets (e.g., the cover-side magnets 541 and the cover-center magnets 542) of the stand cover 500a.

Referring to FIG. 4G, in various embodiments, the first plate 510 of the stand cover 500a may be attached to the first housing 410 or the second housing 420. The second plate 520 may support the foldable electronic device 400 in a landscape orientation (i.e., a state in which the long side of the flexible display 430 is oriented parallel to the ground) when it is unfolded substantially perpendicularly from the first plate 510. A corner of the second plate 520 may be folded at a predetermined angle θ by the folding portion 521. Accordingly, the second plate 520 may support the foldable electronic device 400 tilted at a predetermined angle θ. In this state, the foldable electronic device 400 may provide a user experience similar to that of a desktop computer.

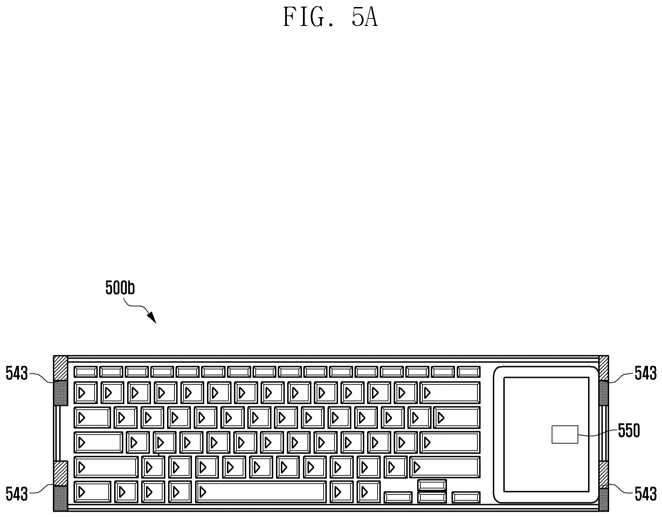

FIG. 5A is a plan view illustrating a keyboard 500b according to various embodiments.

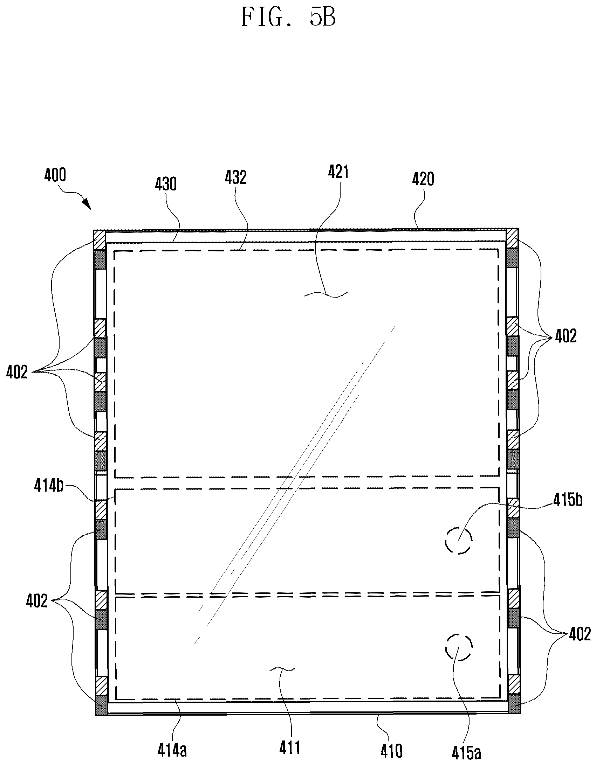

FIG. 5B is a front view illustrating a foldable electronic device 400 in an unfolded state according to various embodiments.

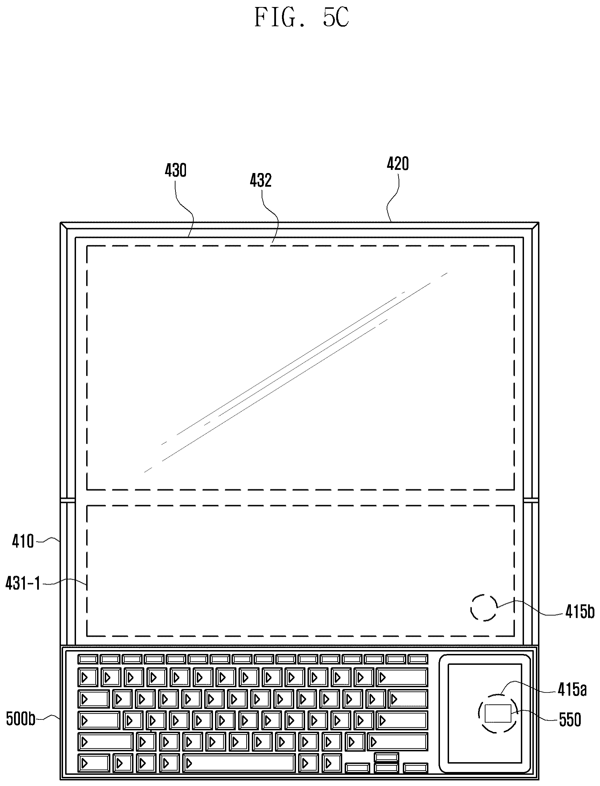

FIG. 5C is a front view illustrating a keyboard 500b and a foldable electronic device 400 according to various embodiments.

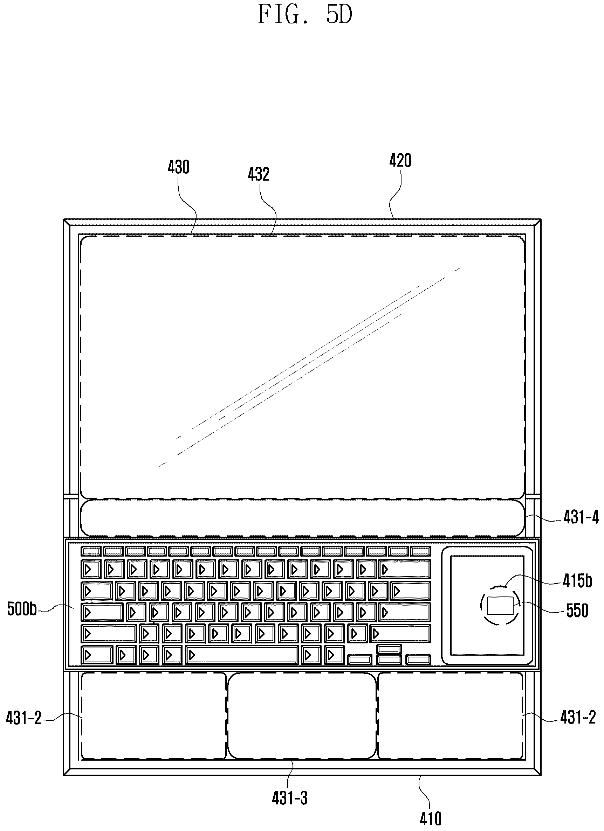

FIG. 5D is a front view illustrating a keyboard 500b and a foldable electronic device 400 according to various embodiments.

Referring to FIGS. 5A and 5B, a foldable electronic device 400 may include at least one keyboard attachment region 414 (e.g., a first keyboard attachment region 414a and a second keyboard attachment region 414b) for attaching the keyboard 500b. The keyboard attachment region 414 may be a region on the first surface 411 of the first housing 410, i.e., the surface on which the flexible display 430 is disposed. The first keyboard attachment region 414a may be arranged, for example, so as to allow the keyboard 500b to be attached near an end of the first housing 410, and the second keyboard attachment region 414b may be arranged, for example, so as to be attached the keyboard 500b spaced apart from the end of the first housing 410.

In various embodiments, the keyboard 500b may include attachment means to be attached to the foldable electronic device 400. The attachment means may include magnets (e.g., the keyboard-side magnets 543). The keyboard attachment region 414 may include magnets (e.g., the housing-side magnets 402) disposed at positions corresponding to the keyboard-side magnet 543. Since the housing-side magnets 402 are disposed on side surfaces of the first housing 410, the magnetic force of the housing-side magnets 402 may act in both directions toward the first surface 411 and the second surface 412 of the first housing 410. Accordingly, at least some of the housing-side magnets 402 may be used for both attaching the keyboard 500b to the keyboard attachment region 414 (e.g., the first keyboard attachment region 414a) and attaching the stand cover 500a to the stand attachment portion 413.

In various embodiments, the foldable electronic device 400 may include at least one keyboard sensor 415a or 415b configured to detect the attachment of the keyboard 500b. For example, the foldable electronic device 400 may include a first keyboard sensor 415a configured to detect attachment of the keyboard 500b to the first keyboard attachment region 414a, and a second keyboard sensor 415b configured to detect attachment of the keyboard 500b to the second keyboard attachment region 414b.

In various embodiments, the keyboard 500b may include a sensing element configured to apply a detection signal to the keyboard sensors 415a and 415b. For example, the keyboard 500b may include a sensor magnet 550, and the keyboard sensors 415a and 415b may each include a Hall effect sensor configured to detect a magnetic field of the sensor magnet 550. A processor

(e.g., the processor 120 of FIG. 1) of the foldable electronic device 400 may be operatively connected to the keyboard sensors 415a and 415b, and thus may identify whether the keyboard 500b is attached to the first keyboard attachment region 414a and/or the second keyboard attachment region 414b via the keyboard sensors 415a and 415b, and perform operations accordingly.

Referring to FIG. 5C, when the keyboard 500b is attached to the first keyboard attachment region 414a of the foldable electronic device 400, the processor may detect the attachment through the first keyboard sensor 415a and display a user interface (UI) suitable for the attachment position of the keyboard 500b. In various embodiments, the processor may display an image in a region 431-1 that is not covered by the keyboard 500b in the first region 431. For example, the processor may define the area as an additional display region extending from the second region 432. In other embodiments, the processor may display a separate user interface in the area 431-1 that is not covered by the keyboard 500b in the first region 431. The user interface may be, for example, an interface that enhances user convenience, such as a camera shooting control interface, a video playback control interface, and/or a virtual joystick.

Referring to FIG. 5D, when the keyboard 500b is attached to the second keyboard attachment region 414b of the foldable electronic device 400, the processor may detect the attachment through the second keyboard sensor 415b and display a user interface (UI) suitable for the attachment position of the keyboard 500b. In various embodiments, the processor may define, among the regions not covered by the keyboard 500b, a portion touched by the user's hand during use of the keyboard 500b, as a touch rejection region 431-2. During use of the keyboard 500b, even when the user's hand comes into contact with the touch rejection region 431-2, the corresponding touch input may be ignored, so the touch rejection region 431-2 may prevent and/or reduce unintended input. In some embodiments, the processor may define, among the regions not covered by the keyboard 500b, a portion relatively close to the user as a touchpad region 431-3. Accordingly, the foldable electronic device 400 may provide a user experience similar to that of a laptop computer.

In various embodiments, the processor may display a user interface in a region 431-4 not covered by the keyboard 500b on the first region 431 and extending from the second region 432. The user interface may include, for example, virtual buttons for user input. The virtual buttons may replace various physical function keys and/or numeric keys of the keyboard 500b. Accordingly, the number of physical function keys and/or numeric keys of the keyboard 500b may be reduced, and the size of the keyboard 500b may be reduced to improve portability.

A foldable electronic device according to various embodiments of the disclosure may include a first housing 410 having a first surface 411 and a second surface 412 located opposite to the first surface 411, and a second housing 420 rotatably coupled to the first housing 410 and having a third surface 421 extending from the first surface 411 and a fourth surface 422 located opposite to the third surface 421 in the unfolded state of the electronic device. At least a portion of the second housing 420 may have a thickness smaller than that of the first housing 410. The foldable electronic device may include a flexible display 430 positioned on the first surface 411 and the third surface 421 and configured to be foldable and unfoldable in accordance with folding and unfolding of the electronic device. The foldable electronic device may include a processor (e.g., the processor 120 of FIG. 1) disposed in the first housing 410 and memory (e.g., the memory 130 of FIG. 1) configured to store instructions executable by the processor. The foldable electronic device may include a thickness compensation member 500 configured to at least partially compensate for a thickness difference between the first housing 410 and the second housing 420. The second housing 420 may have a receiving portion 423 formed on the fourth surface 422 and configured to be detachably coupled to the thickness compensation member 500.

In various embodiments, in the unfolded state, the first surface 411 and the third surface 421 may be positioned on the same plane.

In various embodiments, the receiving portion 423 may include magnets 402 and 403 arranged to detachably couple the thickness compensation member 500.

In various embodiments, the magnets 402 and 403 may include a housing-side magnet 402 disposed at an edge of the second housing 420.

In various embodiments, the thickness compensation member 500 may include a stand cover 500a, and the stand cover 500a may include a first plate 510 configured to be attached to the receiving portion 423, a second plate 520 rotatably coupled to the first plate 510 and configured to support the first housing 410 or the second housing 420, and a hinge 530 rotatably connecting the first plate 510 and the second plate 520.

In various embodiments, the stand cover 500a may include a cover-side magnet 541 disposed on a side surface of the first plate 510, and the receiving portion 423 may include a housing-side magnet 402 disposed at a position corresponding to the cover-side magnet 541.

In various embodiments, the stand cover 500a may include a cover-center magnet 542 disposed at a position spaced apart from the side surface of the first plate 510, and the receiving portion 423 may include a housing-center magnet 403 disposed at a position corresponding to the cover-center magnet 542.

In various embodiments, the first housing 410 may include a stand attachment portion 413 formed on the second surface 412 to attach the stand cover 500a.

In various embodiments, the stand cover 500a may include a cover-side magnet 541 disposed on a side surface of the first plate 510 and a cover-center magnet 542 disposed at a position spaced apart from the side surface of the first plate 510. The stand attachment portion 413 may include a housing-side magnet 402 disposed at a position corresponding to the cover-side magnet 541 and a housing-center magnet 403 disposed at a position corresponding to the cover-center magnet 542.

In various embodiments, the stand cover 500a may include a folding portion 521 configured to fold one corner of the second plate 520 at a predetermined angle.

In various embodiments, the thickness compensation member 500 may include a keyboard 500b.

In various embodiments, the keyboard 500b may include a keyboard-side magnets 543 disposed on a short side of the first plate 510, and the receiving portion 423 may include a housing-side magnet 402 disposed at a position corresponding to the keyboard-side magnet 543 on a side surface of the second housing 420.

In various embodiments, the first housing 410 may include at least one keyboard attachment region 414 formed on the first surface 411.

In various embodiments, the first housing 410 may include a keyboard 500b sensor configured to detect attachment of the keyboard 500b to the keyboard attachment region 414 and operatively connected to the processor (e.g., the processor 120 of FIG. 1).

In various embodiments, the keyboard 500b sensor may include a Hall sensor, and the keyboard 500b may include a sensor magnet 402 or 403 configured to apply a magnetic field to the Hall sensor when the keyboard 500b is attached to the keyboard attachment region 414.

In various embodiments, the flexible display 430 may include a first region 431 located on the first surface 411 and a second region 432 located on the third surface 421. The keyboard attachment region 414 may include a first keyboard attachment region 414a positioned relatively closer to an end of the first housing 410, and a second keyboard attachment region 414b positioned relatively farther from the end of the first housing 410.

In various embodiments, the instructions may be configured to, when executed by the processor, cause the electronic device to detect that the keyboard 500b is attached to the first keyboard attachment region 414a and define a region 431-1, which is not covered by the keyboard attachment region 414 in the first region 431, as an additional display region extending from the second region 432.

In various embodiments, the instructions may be configured to, when executed by the processor, cause the electronic device to detect that the keyboard 500b is attached to the first keyboard attachment region 414a and display a user interface in a region 431-1, which is not covered by the keyboard attachment region 414 in the first region 431.

In various embodiments, the instructions may be configured to, when executed by the processor, cause the electronic device to detect that the keyboard 500b is attached to the second keyboard attachment region 414b and define a touch rejection region 431-2 for a portion that is touched by the user's hand during use of the keyboard 500b, so as to ignore touch input to the portion.

In various embodiments, the instructions may be configured to, when executed by the processor, cause the electronic device to detect that the keyboard 500b is attached to the second keyboard attachment region 414b and define a touchpad region 431-3 in a portion of the first region 431 that is not covered by the keyboard attachment region 414.

The embodiments of the disclosure disclosed in this specification and drawings are provided merely to propose specific examples in order to easily describe the technical features according to the embodiments of the disclosure and to help understanding of the embodiments of the disclosure, and are not intended to limit the scope of the embodiments of the disclosure. Accordingly, the scope of various embodiments of the disclosure is to be construed as including all changes or modifications derived based on the technical idea of the various embodiments of the disclosure in addition to the embodiments disclosed herein.

## Claims

1. A foldable electronic device comprising:
a first housing having a first surface and a second surface located opposite to the first surface;
a second housing rotatably coupled to the first housing, the second housing having a third surface extending from the first surface in an unfolded state of the electronic device and a fourth surface located opposite to the third surface, wherein at least a portion of the second housing having a thinner thickness than the first housing;
a flexible display positioned on the first surface and the third surface and configured to be foldable and unfoldable in accordance with folding and unfolding of the electronic device;
a processor disposed in the first housing;
memory configured to store instructions executable by the processor; and
a thickness compensation member configured to at least partially compensate for a thickness difference between the first housing and the second housing,
wherein the second housing comprises a receiving portion formed on the fourth surface and configured to be detachably coupled to the thickness compensation member.

2. The foldable electronic device of claim 1, wherein, in the unfolded state, the first surface and the third surface are positioned on a same plane.

3. The foldable electronic device of claim 1, wherein the receiving portion comprises a housing-side magnet disposed at an edge of the second housing and arranged to detachably couple the thickness compensation member.

4. The foldable electronic device of claim 1, wherein the thickness compensation member comprises a stand cover, and
wherein the stand cover comprises:
a first plate configured to be attached to the receiving portion,
a second plate configured to be rotatable relative to the first plate and to support the first housing or the second housing, and
a hinge rotatably coupling the first plate and the second plate.

5. The foldable electronic device of claim 4, wherein the stand cover comprises a cover-side magnet disposed on a side surface of the first plate and a cover-center magnet disposed at a position spaced apart from the side surface of the first plate, and
wherein the receiving portion comprises a housing-side magnet disposed at a position corresponding to the cover-side magnet and a housing-center magnet disposed at a position corresponding to the cover-center magnet.

6. The foldable electronic device of claim 4, wherein the first housing comprises a stand attachment portion formed on the second surface and configured to attach the stand cover,
wherein the stand cover comprises:
a cover-side magnet disposed on a side surface of the first plate, and
a cover-center magnet disposed at a position spaced apart from the side surface of the first plate, and
wherein the stand attachment portion further comprises:
a housing-side magnet disposed at a position corresponding to the cover-side magnet, and
a housing-center magnet disposed at a position corresponding to the cover-center magnet.

7. The foldable electronic device of claim 1, wherein the thickness compensation member comprises a keyboard.

8. The foldable electronic device of claim 7, wherein the keyboard comprises a keyboard-side magnet disposed on a short side of the first plate, and
wherein the receiving portion comprises a housing-side magnet disposed on a side surface of the second housing at a position corresponding to the keyboard-side magnet.

9. The foldable electronic device of claim 7, wherein the first housing comprises at least one keyboard attachment region on the first surface.

10. The foldable electronic device of claim 9, wherein the first housing comprises a keyboard sensor configured to detect attachment of the keyboard to the keyboard attachment region and operatively connected to the processor,
wherein the keyboard sensor comprises a Hall sensor, and
wherein the keyboard comprises a sensor magnet configured to apply a magnetic field to the Hall sensor when the keyboard is attached to the keyboard attachment region.

11. The foldable electronic device of claim 9, wherein the flexible display comprises a first region located on the first surface and a second region located on the third surface, and
wherein the keyboard attachment region comprises:
a first keyboard attachment region positioned on the first housing relatively closer to an end of the first housing, and
a second keyboard attachment region positioned on the first housing relatively farther from the end of the first housing.

12. The foldable electronic device of claim 11, wherein the instructions are configured to, when executed by the processor, cause the electronic device to detect that the keyboard is attached to the first keyboard attachment region and define a region, which is not covered by the keyboard attachment region in the first region, as an additional display region extending from the second region.

13. The foldable electronic device of claim 11, wherein the instructions are configured to, when executed by the processor, cause the electronic device to detect that the keyboard is attached to the first keyboard attachment region and display a user interface in a region that is not covered by the keyboard attachment region in the first region.

14. The foldable electronic device of claim 11, wherein the instructions are configured to, when executed by the processor, cause the electronic device to detect that the keyboard is attached to the second keyboard attachment region and define a touch rejection region to ignore touch input to a portion that comes into contact with a user's hand during use of the keyboard.

15. The foldable electronic device of claim 11, wherein the instructions are configured to, when executed by the processor, cause the electronic device to detect that the keyboard is attached to the second keyboard attachment region and define a touchpad region in a region that is not covered by the keyboard attachment region in the first region.
